## Europäisches Patentamt
## European Patent Office
## Office européen des brevets

(19)

(11) Veröffentlichungsnummer: **0 284 921**
**B1**

(12) # EUROPÄISCHE PATENTSCHRIFT

(45) Veröffentlichungstag der Patentschrift:
05.12.90

(51) Int. Cl.⁵: **B23K 26/02**

(21) Anmeldenummer: **88104329.3**

(22) Anmeldetag: **18.03.88**

(54) **Vorrichtung zum Führen von optischen Strahlen.**

(30) Priorität: **02.04.87 DE 3711088**
**08.03.88 DE 3807471**

(43) Veröffentlichungstag der Anmeldung:
**05.10.88 Patentblatt 88/40**

(45) Bekanntmachung des Hinweises auf die Patenterteilung:
**05.12.90 Patentblatt 90/49**

(84) Benannte Vertragsstaaten:
**DE FR GB IT SE**

(56) Entgegenhaltungen:
**EP-A- 0 185 233**
**DE-A- 3 530 189**
**GB-A- 2 153 785**
**US-A- 4 396 285**
**US-A- 4 638 143**

**PATENT ABSTRACTS OF JAPAN, Band 4,**
**nr. 179 (M-46)[661], 11. Dezember 1980; & JP - A**
**- 55 126 392 (SUMITOMO DENKI KOGYO**
**K.K.) 30.09.1980**
**PATENT ABSTRACTS OF JAPAN, Bad 5,**
**Nr. 97 (M-75)[769], 24. Juni 1981; & JP - A**
**- 56 41090 (HITACHI SEISAKUSHO K.K.) 17.04.1981**

(73) Patentinhaber: **MAN Technologie Aktiengesellschaft,**
**Dachauer Strasse 667, D-8000 München 50(DE)**

(72) Erfinder: **Bickel, Martin, Dipl.-Ing., Abbachstrasse 26,**
**D-8000 München 50(DE)**
Erfinder: **Baum, Albrecht, Dipl.-Ing., Budweiserweg 3,**
**D-8060 Dachau(DE)**

## Beschreibung

Die Erfindung bezieht sich auf eine Vorrichtung zur Führung von optischen Strahlen mit mindestens einem Umlenkspiegel und einem daran anschließenden Strahlenaustrittskörper, der um zwei senkrecht zueinander stehenden Achsen schwenkbar ist, wobei eine Schwenkachse parallel zum bzw. in den Umlenkspiegel einfallenden Strahl liegt und die zweite Schwenkachse senkrecht dazu verläuft.

Vorrichtungen dieser Art dienen zur Führung eines Strahles entlang bestimmter Bereiche eines Bauteiles, insbesondere zur Bearbeitung von Werkstücken mit Laserstrahlen, wie z. B. Schweißen, Härten, Schneiden etc. Die Vorrichtung wird dazu gegenüber einem Bearbeitungstisch so angeordnet, daß zwischen Vorrichtung und Tisch eine Relativbewegung in drei Dimensionen möglich ist.

Aus der DE 35 30 189 Al ist eine Vorrichtung der eingangs genannten Art bekannt, die mehrere mit jeweils einem Umlenkspiegel verbundene Gelenkarme aufweist. Jeder Gelenkarm ist um eine Achse drehbar, die im zugehörigen einfallenden Strahl liegt, so daß das letzte als Strahlenaustritt dienende Glied und damit der Ausgangsstrahl in eine Richtung schwenkbar ist. Der Brennpunkt des Austrittsstrahles kann dabei einen Kreis beschreiben oder entlang einer Tangente dazu geschwenkt werden. Bei einem Schweißvorgang, beispielsweise, wird die Schweißnaht unterhalb des Austrittsstrahles senkrecht zur Schwenkbewegungsrichtung geführt. Eine Lagekorrektur erfolgt mit der Schwenkbewegung des Strahlenaustrittskörpers.

Diese Arbeitsweise dient zur Bearbeitung von ebenen Werkstücken. Wenn ein gekrümmtes Bauteil geschweißt oder geschnitten werden soll, dann wird die Halterung zusammen mit dem Bauteil jeweils so geschwenkt werden, daß der Strahl immer senkrecht zur angestrahlten Flächeneinheit steht. Dieses bedarf komplizierter Mechanismen, die neben den linearen Bewegungen auf einer Ebene auch Schwenkbewegungen entweder des Werktisches oder der Strahlungsvorrichtung benötigen. Außerdem ist dabei eine genaue Führung des Strahleneinfallpunktes nicht mehr möglich.

Der Erfindung liegt die Aufgabe zugrunde, eine Vorrichtung der eingangs genannten Art zu schaffen, mit der unter fertigungstechnisch einfachen Maßnahmen eine genaue und schnelle Führung eines Strahles auch für Bauteile mit gekrümmten Oberflächen möglich ist.

Die Aufgabe wird erfindungsgemäß mit den Merkmalen des Anspruchs 1 gelöst.

Der erfindungsgemäße Mechanismus ermöglicht es, den Austrittsstrahl in zwei senkrecht zueinderliegenden Richtungen zu schwenken, wobei mit der einen Schwenkrichtung der Strahl senkrecht zur Werkstückoberfläche einstellbar ist, während die zweite Schwenkrichtung stets zur Positionierung des Strahles senkrecht zur Führungsrichtung zur Verfügung steht. Damit entfallen Bewegungsmaßnahmen, bei denen ein gesamtes Werkstück oder die gesamte Strahleneinrichtung, d. h. große Massen geschwenkt werden müssen.

Bei der erfindungsgemäßen Vorrichtung ist lediglich eine 3-dimensionale, lineare Beweglichkeit und keine Schwenkbewegung der Strahlungsvorrichtung oder des Werkstückhalters erforderlich. Für die Führung des Strahles zur Positionskorrektur und zur Einhaltung der senkrechten Richtung des Strahles gegenüber der Werkstückoberfläche muß lediglich der relativ kleine Strahlenaustrittskörper bewegt werden, so daß hier darüber hinaus eine schnelle und präzise Positionierung des Strahles sowie eine kontinuierliche Führung entlang einer in der Ebene oder räumlich gekrümmten Linie möglich ist.

Aus der US-A 4 396 285 ist es bekannt, einen von einem Spiegel reflektierten Strahl durch Schwenken des Spiegels zu positionieren, was aber von Hand durchgeführt wird, wobei außerdem nicht ersichtlich ist, wie der Spiegel zur Durchführung der Schwenkbewegungen geführt sein sollte. Diese bekannte Ausführung ist außerdem nicht für eine gattungsgemäße Vorrichtung geeignet, da der Schwenkwinkel für den Strahl durch ein Austrittsfenster eines erforderlichen Schutzgehäuses stark begrenzt werden würde.

Bei der erfindungsgemäßen Vorrichtung ist dagegen die Schwenkbarkeit zumindest in einer Richtung unbegrenzt. Der Strahlenaustrittskörper kann nämlich um die erste, im einfallenden Strahl liegende Achse um 360° gedreht werden, womit die erfindungsgemäße Vorrichtung auch dazu geeignet ist, um eine Bearbeitung entlang einer Umfangslinie innerhalb eines Rohres durchzuführen. Mit der begrenzten Schwenkbeweglichkeit in senkrechter Richtung dazu sollen nur Positionskorrekturen durchgeführt werden, die ohnehin einen geringen Schwenkwinkel erfordern.

In einer einfachen Ausführung ist die dritte Schwenkachse auch in der Reflektionsebene des Spiegels vorgesehen, und zwar an der Kante oder außerhalb der Kante des Spiegels, womit eine technisch einfach realisierbare Aufhängung des Spiegels möglich ist.

Eine derartige Aufhängung des Spiegels ermöglicht ferner eine einfache Realisierung der koordinierten Schwenkbewegung zwischen dem Strahlenaustrittskörper und dem Spiegel, indem die Bewegung des Strahlenaustrittskörpers über einen Anschlag übertragen wird. Der Anschlag braucht dabei nur so gewählt werden, daß er in der Ebene der Schwenkachse des Spiegels und der zweiten Schwenkachse des Strahlenaustrittskörpers zu liegen kommt und sich im gleichen Abstand zur zweiten Schwenkachse des Strahlenaustrittskörpers befindet, wie die Schwenkachse des Spiegels zur zweiten Schwenkachse des Strahlenaustrittskörpers. Dabei wird automatisch bei einer Schwenkbewegung des Strahlenaustrittskörpers der Spiegel um einen halben Winkel mitgeschwenkt.

Die Beweglichkeit des Systems läßt sich somit mit fertigungstechnisch sehr einfachen Mitteln herstellen. Für die Schwenkbewegung um die erste Achse wird eine konventionelle Drehlagerung verwendet, bei der der Strahlenaustrittskörper, der Spiegel und gegebenenfalls ein Antrieb für die Schwenkbewegung als Baueinheit zusammen um den in den Spiegel einfallenden Strahl gedreht werden kann.

Die Ausgestaltung der erfindungsgemäßen Vorrichtung hat den weiteren Vorteil, daß eine automatische Steuerung zur Spurnachführung des Strahles präzise und mit fertigungstechnisch sehr einfachen Mitteln durchführbar ist.

Für die Schwenkbewegung um die zweite Achse kann nämlich eine Spindel verwendet werden, die so angeordnet ist, daß der Bewegungsstift der Spindel eine Kraft gegen den Strahlenaustrittskörper in der Schwenkebene und Schwenkrichtung ausüben kann. Die Kraftauflage ist dabei vorzugsweise möglichst nahe dem Strahlenaustrittsende vorzusehen, wodurch die Positioniergenauigkeit verbessert werden kann, die letztlich nur noch von der Präzision der Spindel abhängt.

Um den Düsenkörper immer zur definierten Anlage an der Spindel zu bringen, wird er mittels einer am Vorrichtungsgehäuse angehängten Rückholfeder gegen den Anschlag der Spindel gedrückt.

Der mitzuschwenkende Spiegel wird gemäß einer fertigungstechnisch einfachen Art mittels einer Blattfeder am Vorrichtungsgehäuse befestigt, wobei ein freier Zwischenbereich der Blattfeder als Schwenkachse dient. Außerdem sorgt die Blattfeder für eine zusätzliche Rückstellkraft. Die Schwerkraft sorgt in annähernd senkrechter Stellung des Austrittsstrahles bereits für eine Anlage des Spiegels am Strahlenaustrittskörper. Bei der Verwendung der Vorrichtung zur Ausarbeitung von Gegenständen, bei denen große Schwenk- oder Drehwinkel um die erste Achse erforderlich sind, wird man eine zusätzliche Rückstellkraft für den Spiegel vorsehen müssen, eine Druck- oder Zugfeder beispielsweise.

Die Schwenkbewegung des Spiegels wird direkt vom Strahlenaustrittskörper ausgeübt, wobei ein genaues Mitschwenken des Spiegels erfolgt und damit die genaue Fokusierung des Strahles beibehalten wird.

Die Kraftübertragung zwischen dem Strahlenaustrittskörper und dem Spiegel erfolgt auf einem Abstand zur Drehachse des Strahlenaustrittskörpers, der gleich dem Abstand zwischen den beiden Schwenkachsen ist. Damit wird der Spiegel jeweils um einen halben Schwenkwinkel des Düsenkörpers mitbewegt, so daß die reflektierten Strahlen stets in den Düsenkörper einfallen.

In der Zeichnung ist ein Ausführungsbeispiel schematisch dargestellt.

Fig. 1 zeigt eine Vorrichtung zur Führung von optischen Strahlen,

Fig. 2 ein Detail aus Fig. 1 und

Fig. 3 ein Detail aus Fig. 2 in verschiedenen Schwenkpositionen.

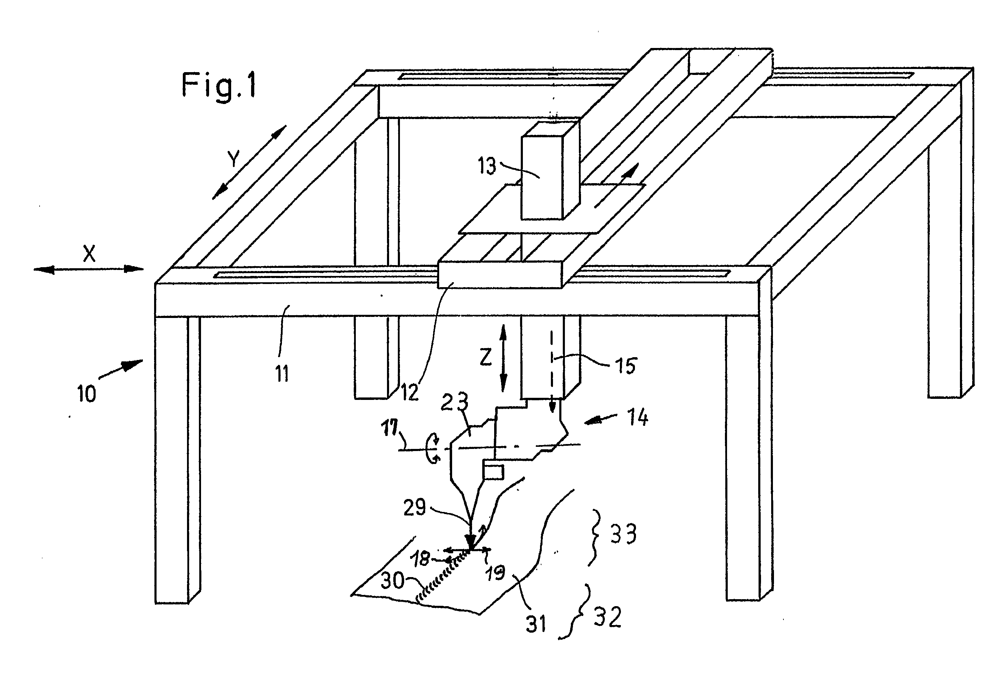

In Fig. 1 ist eine Vorrichtung zur Durchführung von optischen Strahlen dargestellt, wie sie beispielsweise für Schweiß- oder Schneidvorgänge und dergleichen verwendet wird. Die Vorrichtung 10 besteht aus einem mehrteiligen Gerüst mit relativ zueinander verschiebbaren Gerüstteilen 11 bis 13, mit denen eine Strahlenumlenkvorrichtung 14 in den X, Y, Z-Richtungen verschiebbar ist.

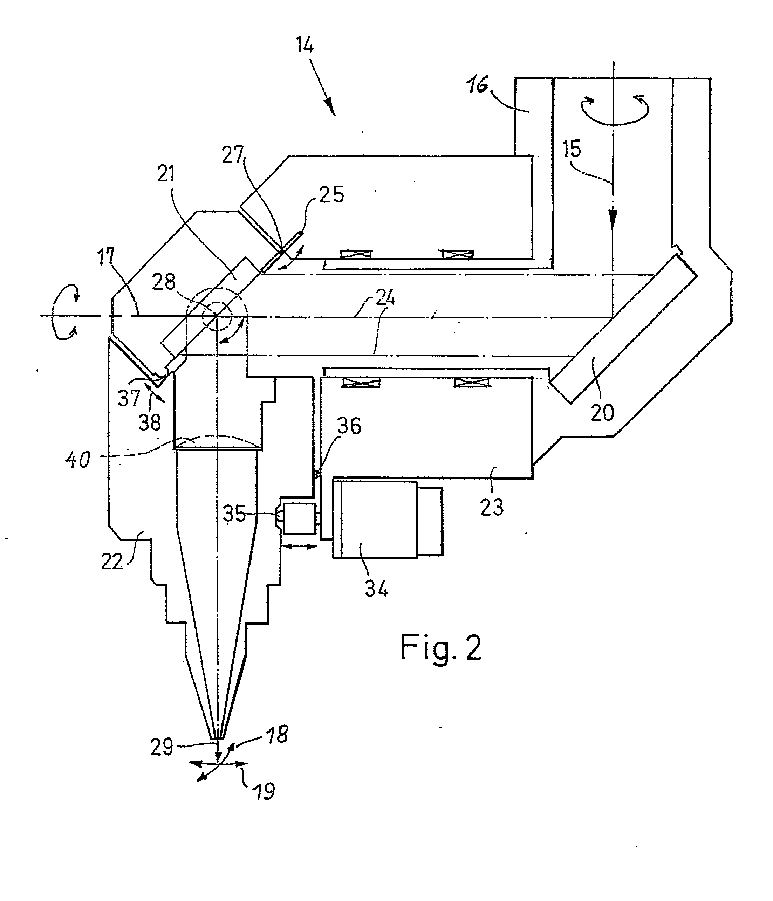

Die Strahlen, z. B. Laserstrahlen 15, werden über das vertikal verschiebbare Gerüst 13 in die Umlenkvorrichtung 14 geführt, wo sie, wie es in Fig. 2 näher dargestellt ist, von einem starren Umlenkspiegel 20 und einem schwenkbaren Umlenkspiegel 21 umgelenkt werden, so daß der Austrittsstrahl 29 annähernd parallel zum Eingangsstrahl 15 jedoch ortsverschoben gerichtet ist. Der starre Spiegel 20 ist mit dem 3-dimensional verschiebbaren Gehäuse 16 verbunden. Die Umlenkvorrichtung 14 enthält ferner ein drehbewegliches Gehäuse 23, das den beweglichen Spiegel 21 und einen Strahlenaustrittskörper 22 trägt. Dem drehbaren Gehäuse 23 ist ferner eine Spindel 34 zugeordnet.

Die mit dem drehbeweglichen Gehäuse 23 verbundenen Bauteile 21, 22, 34 sind zusammen mit dem Gehäuse 23 als eine Baueinheit um eine erste Achse 17 drehbar gelagert. Die Achse 17 liegt im Strahlengang 24, der in den beweglichen Spiegel 21 einfällt. Das Gehäuse 23 kann mit den zugehörigen Bauteilen 21, 22, 34 um 360° gedreht werden.

Der Strahlenaustrittskörper 22 ist seinerseits gegenüber dem drehbeweglichen Gehäuse 23 um eine zweite Achse 28 schwenkbar, die senkrecht zur Strahlenebene der in den beweglichen Spiegel 21 einfallenden 24 und reflektierenden 29 Strahlen liegt. Schließlich ist der Spiegel 21 gegenüber dem drehbeweglichen Gehäuse 23 um eine dritte Achse 27 schwenkbar angeordnet. Die zweite und die dritte Schwenkachse 28 bzw. 27 verlaufen parallel zueinander und befinden sich in der Reflektionsfläche des Spiegels 21.

Der bewegliche Spiegel 21 ist mittels einer Blattfeder 25 am beweglichen Gehäuse 23 befestigt derart, daß sie im freien Linienbereich der Blattfeder 25 zwischen dem Gehäuse 23 und dem Spiegel 21 die dritte Schwenkachse 27 bildet. Die Blattfeder 25 dient gleichzeitig als Rückstellkraft für den Spiegel 21, damit dieser ständig an der Kontaktstelle 37 auf dem Strahlenaustrittskörper 22 aufliegt.

Die Spindel 34 hat einen gegen den Strahlenaustrittskörper 22 anliegenden Anschlag 35, mit dem der Strahlenaustrittskörper 22 bzw. der Austrittsstrahl 29 in Pfeilrichtung 19 schwenkbar ist. Eine Rückholfeder 36, die mit einem Ende mit dem beweglichen Gehäuse 23 verbunden ist und deren anderes Ende mit dem Strahlenaustrittskörper 22 derart verbunden ist, daß er diesen gegen den Anschlag 35 der Spindel 34 drückt. Bei dieser Ausgestaltung wird die Schwenkbewegung in die eine Richtung (in Fig. 2 nach links) durch die Druckkraft des Anschlages 35 bewirkt, während die Gegenrichtung (gemäß Fig. 2 nach rechts) durch die Zugkraft der Rückholfeder 36 bewirkt wird, wenn der Anschlag 35 der Spindel 34 entsprechend zurückgezogen wird. Wenn die Spindel 34 bzw. der Anschlag 35 relativ weit von der zweiten Schwenkachse 28 entfernt ist und eine hochpräzise Spindel 34 verwendet wird, dann können genaue Verschiebungen im μ-Bereich durchgeführt werden.

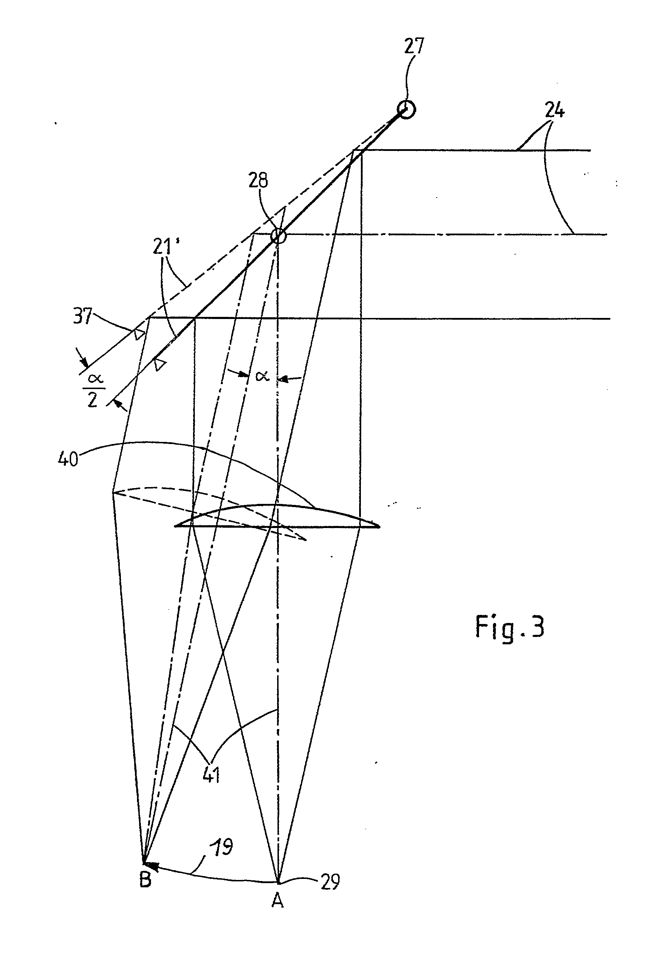

Simultan mit der Schwenkbewegung des Strahlenaustrittskörpers 23 wird der Spiegel 21 bewegt. Dies erfolgt einfach dadurch, daß zwischen dem Strahlenaustrittskörper 22 und dem Spiegel 21 eine als Anschlag ausgebildete Kontaktstelle 37 zwischen beiden Teilen 21, 22 vorgesehen ist. Über diese Kontaktstelle 37 überträgt der Strahlenaustrittskörper 22 seine Bewegung auf den Spiegel 21. Die Kontaktstelle 37, die punktförmig, flächenhaltig oder als Kontaktlinie ausgebildet sein kann, liegt auf der gleichen Ebene, wie sie von der zweiten und dritten Schwenkachse 28 bzw. 27 eingenommen werden. Die zweite Schwenkachse 28 für den Strahlenaustrittskörper 22 liegt dabei genau in der Mitte zwischen der Kontaktstelle 37 und der dritten Schwenkachse 27 für den Spiegel. Dies hat zur Folge, daß bei einer Schwenkbewegung des Strahlenaustrittsköprers 22 der Spiegel 21 automatisch um den halben Winkel mitgeschleppt wird, wie es in Fig. 3 verdeutlicht ist.

Die Fig. 3 zeigt zwei Positionen des Düsenaustrittskörpers 22 und damit des Spiegels 21, wobei lediglich der Strahlengang und die Reflektionsfläche 21 des Spiegels sowie eine Linse 40 des Strahlenaustrittskörpers 22 gezeichnet sind. In der mit vollen Strichen dargestellten Position der Reflektorschicht 21' des Spiegels 21 und der Linse 40 trifft der gebündelte Strahl 29 auf einen Punkt A. Durch Betätigung der Spindel 34 drückt der Anschlag 35 den Strahlenaustrittskörper 22 beispielsweise um einen Winkel $\alpha$ in Richtung 19 nach links in die gestrichelte Stellung. Über die Kontaktstelle 37 zwischen dem Strahlenaustrittskörper 22 und dem Spiegel 21 wird die Reflektionsschicht 21' von der ursprünglichen Position in die gestrichelt dargestellte Position gebracht. Da die Kontaktstelle 37 für den Spiegel 21 und die Schwenkachse 27 des Spiegels im gleichen Abstand zur Schwenkachse 28 des Strahlenaustrittskörpers 23 angeordnet sind, bewegt sich die Reflektionsschicht 21' nur um den Winkel $\alpha/2$.

Der reflektierte Strahl 29 erfährt dabei eine Schwenkung um den Winkel $\alpha$, d. h., er folgt der Bewegung des Strahlenaustrittskörpers 22. Der bei der vorstehend beschriebenen Schwenkbewegung entstehende Parallelversatz aufgrund des aus der Mittellage geschwenkten Spiegels bleibt ohne Einfluß, da die nachfolgende Linse 40 die parallel einfallenden Strahlen immer im selben Punkt, bezogen auf die Linsenachse 41, bündelt.

Mit diesem Mechanismus, bei dem lediglich eine relativ geringe Masse, nämlich die des Strahlenaustrittskörpers 22 und des Spiegels 21, geschwenkt werden müssen, kann die Position des Arbeitstrahles 29 in Richtung 19 mit hoher Genauigkeit, d. h. im µ-Bereich durchgeführt werden. Diese Schwenkbewegung 19 wird zur Lagekorrektur bei der Führung des Strahles 29 entlang einer zu bearbeitenden Linie genützt. Über die Drehbeweglichkeit um die erste Achse 17 ist der Ausgangsstrahl 29 in einer Richtung 18 schwenkbar, die zur Richtung 19 senkrecht steht. Damit ist die Möglichkeit gegeben, bei Einhaltung der Positioniermöglichkeit über die Schwenkbewegung 19 den Strahl 29 über wellige oder irgendwie gekrümmte Werkstücke zu führen, und zwar derart, daß der Strahl 29 stets senkrecht zum jeweiligen angestrahlten Flächenelement steht.

In Fig. 1 ist beispielsweise ein Werkstück 31 gezeigt, das einen ebenen Bereich 32 und anschließend einen ansteigenden Bereich 33 aufweist. Bei der Führung des Strahles 29 entlang der ebenen Schweißnaht 30, ist das drehbare Gehäuse 23 so eingestellt, daß der Ausgangsstrahl 29 in Z-Richtung gerichtet ist. Hierbei erfolgt lediglich eine Korrekturschwenkbewegung in Richtung 19, soweit erforderlich. Erreicht der Strahl 29 die nach oben gekrümmte Nahtlinie des Bereiches 33, dann wird das Gehäuse 23 zusammen mit dem Strahlenaustrittskörper 22 und dem Spiegel 21 um die Achse 17 gedreht derart, daß der Ausgangsstrahl 29 in Richtung 18 (gemäß Fig. 1 nach hinten) geschwenkt wird, und zwar jeweils so weit, bis der Ausgangsstrahl 29 die Normale des jeweiligen angestrahlten Flächenpunktes erreicht.

Die Steuerung für die Schwenkbewegung kann automatisch erfolgen, indem nicht dargestellte Lagesensoren entsprechend angebracht werden und diese über bekannte Regler auf die Spindel 34 bzw. eines nicht dargestellten Antriebes für die Drehbewegung des Gehäuses 23 eingesetzt werden.

Anstelle eines ebenen Spiegels 21 und einer anschließenden strahlenkonzentrierenden Optik 40 kann auch ein Konkavspiegel verwendet werden.

Die in der Zeichnung dargestellte und vorstehend beschriebene Ausführungsform dient zur kontinuierlichen Führung des Strahles 29 entlang einer in einer Ebene gekrümmten Linie, wie sie beispielsweise in Fig. 1 gezeigt ist. Es ist selbstverständlich möglich, die Vorrichtung durch eine weitere schwenkbare Anlenkung, wie sie aus dem Stand der Technik bekannt ist, zu erweitern. Die Schwenkachse für diese zusätzliche Schwenkbewegung liegt im Einfallsstrahl 15 des starren Spiegels 20. Durch diese zusätzliche Bewegungsmöglichkeit, die den Strahlenaustrittskörper 22 in einem Kreis führt, der senkrecht zum Schwenkkreis um die Achse 17 liegt, kann der Austrittsstrahl 29, ohne ihn absetzen bzw. versetzen zu müssen, kontinuierlich und mit Positionskorrekturmöglichkeit entlang jeder beliebigen räumlichen Linie geführt werden.

**Patentansprüche**

1. Vorrichtung (14) zur Führung von optischen Strahlen (15, 24) mit mindestens einem Umlenkspiegel (20, 21) und einem daran anschließenden Strahlenaustrittskörper (22), der um zwei senkrecht zueinander stehenden Achsen (17, 28) bewegbar ist, wobei eine Schwenkachse (17) parallel zum bzw. im in den Umlenkspiegel (21) einfallenden Strahl (24) liegt und die zweite Schwenkachse (28) rechtwinklig dazu verläuft, dadurch gekennzeichnet, daß die zweite Schwenkachse (28) in Mittelstellung des Strahlenaustrittskörpers (22) in der Reflektionsfläche (21') des Spiegels (21) liegt, daß der Spiegel um eine dritte Achse (27) schwenkbar angeordnet ist, die parallel zur zweiten Schwenkachse (28) verläuft und daß zwischen dem Strahlenaustrittskörper (22) und dem Spiegel (21) eine Kontaktstelle (37) vorgesehen ist, die in Bezug auf die dritte Schwenkachse (27) des Spiegels so angeordnet ist, daß der Spiegel mit dem halben Schwenkwinkel ($\alpha/2$) des Strahlenaustrittskörpers mitbewegbar ist.

2. Vorrichtung nach Anspruch 1, dadurch gekennzeichnet, daß die dritte Schwenkachse (27) in der Reflektionsfläche (21') des Spiegels (21) liegt.

3. Vorrichtung nach Anspruch 1 oder 2, dadurch gekennzeichnet, daß der Spiegel (21) über eine Blattfeder (25) an einem um die erste Schwenkachse (17) drehbar gelagerten Gehäuse (23) befestigt ist und die Blattfeder gleichzeitig die dritte Schwenkachse (27) für den Spiegel (21) bildet.

4. Vorrichtung nach einem der vorhergehenden Ansprüche, dadurch gekennzeichnet, daß die Kontaktstelle (37) zwischen dem Strahlenaustrittskörper (22) und dem Spiegel (21) und die dritte Schwenkachse (27) für den Spiegel äquidistant zur zweiten Schwenkachse (28) angeordnet sind.

5. Vorrichtung nach Anspruch 3, dadurch gekennzeichnet, daß die Blattfeder (25) so ausgebildet ist, daß sie den Spiegel (21) an der Kontaktstelle (37) gegen den Strahlenaustrittskörper (22) zu drücken vermag.

6. Vorrichtung nach einem der vorhergehenden Ansprüche, dadurch gekennzeichnet, daß eine Spindel (34, 35) für die Schwenkbewegung um die zweite Achse (28) vorgesehen ist, die gegen den Strahlenaustrittskörper (22) zum Anliegen kommt.

7. Vorrichtung nach Anspruch 6, dadurch gekennzeichnet, daß eine Rückholfeder (36) vorgesehen ist, die den Strahlenaustrittskörper (22) gegen die Spindel (35) drückt.

## Revendications

1. Dispositif (14) pour conduire des rayons optiques (15, 24) à l'aide d'au moins un miroir de déviation (20, 21) suivi d'un organe de sortie de rayons (22) qui est mobile autour de deux axes (17, 28) perpendiculaires l'un à l'autre, un axe de pivotement (17) étant parallèle au rayon (24) tombant sur le miroir de déviation (21) ou contenant ce rayon et le second axe de pivotement (28) étant perpendiculaire au précédent, dispositif caractérisé en ce que le second axe (28) se situe en position médiane de l'organe de sortie de rayons (22) dans la surface de réflexion (21') du miroir (21), le miroir pouvant pivoter autour d'un troisième axe (27) parallèle au second axe de pivotement (28) et en ce qu'entre l'organe de sortie de rayons (22) et le miroir (21), on a une zone de contact (37) qui est disposée par rapport au troisième axe de pivotement (27) du miroir pour que le miroir soit entraîné avec le demi-angle de pivotement (α/2) de l'organe de sortie de rayons.

2. Dispositif selon la revendication 1, caractérisé en ce que le troisième axe de pivotement (27) est contenu dans la surface de réflexion (21') du miroir (21).

3. Dispositif selon la revendication 1 ou 2, caractérisé en ce que le miroir (21) est fixé par un ressort-lame (25) au boîtier (23) monté en rotation autour du premier axe de pivotement (17) et en ce que le ressort-lame forme en même temps le troisième axe de pivotement (27) du miroir (21).

4. Dispositif selon l'une quelconque des revendications précédentes, caractérisé en ce que la zone de contact (37) entre l'organe de sortie de rayons (22) et le miroir (21) et le troisième axe de sortie (27) du miroir sont équidistants par rapport au second axe de pivotement (28).

5. Dispositif selon la revendication 3, caractérisé en ce que le ressort-lame (27) est conçu pour pouvoir pousser le miroir (21) au niveau de la zone de contact (37) contre l'organe de sortie de rayons (22).

6. Dispositif selon l'une des revendications précédentes, caractérisé par un miroir (34, 35) pour le mouvement de pivotement autour du second axe (28), miroir qui vient en appui contre l'organe de sortie de rayons; (22).

7. Dispositif selon la revendication 6, caractérisé par un ressort de rappel (36) qui pousse l'organe de sortie de rayons; (22) contre la broche (35).

## Claims

1. A device (14) for directing optical beams (15, 24), with at least one deflecting mirror (20, 21) and with a beam emission member (22) connected thereto and being movable about two axes (17, 28) perpendicular to one another, wherein one pivoting axis (17) lies parallel to, and/or within, the beam (24) which falls into the deflecting mirror (21), and the second pivoting axis (28) extends at a right angle thereto, characterised in that the second pivoting axis (28) lies, in the middle position of the beam emission member (22), in the reflecting surface (21') of the mirror (21), that the mirror is arranged so as to be pivotable about a third axis (27) extending parallel to the second pivoting axis (28), and that between the beam emission member (22) and the mirror (21) there is provided a contact place (37) which is so arranged in relation to the third pivoting axis (27) of the mirror, that the mirror is movable jointly with the beam emission member by half the pivoting angle (α/2) thereof.

2. A device according to claim 1, characterised in that the third pivoting axis (27) lies in the reflecting surface (21') of the mirror (21).

3. A device according to claim 1 or 2, characterised in that the mirror (21) is secured by means of a leaf spring (25) to a housing (23) mounted so as to be rotatable about the first pivoting axis (17), and the leaf spring simultaneously forms the third pivoting axis (27) for the mirror (21).

4. A device according to any one of the preceding claims, characterised in that the contact place (37) between the beam emission member (22) and the mirror (21), and the third pivoting axis (27) for the mirror, are arranged equidistant in relation to the second pivoting axis (28).

5. A device according to claim 3, characterised in that the leaf spring (25) is so constructed that it is capable of pressing the mirror (21) on the contact place (37) against the beam emission member (22).

6. A device according to any one of the preceding claims, characterised in that a spindle (34, 35) is provided for the pivoting movement about the second axis (28), and comes to bear against the beam emission member (22).

7. A device according to claim 6, characterised in that a return spring (36) is provided, which presses the beam emission member (22) against the spindle (35).

Fig.1

EP 0 284 921 B1

Fig. 2

Fig.3